# EUROPÄISCHE PATENTSCHRIFT

(11) **EP 2 769 953 B1**
(45) Veröffentlichungstag und Bekanntmachung des Hinweises auf die Patenterteilung: **07.10.2015**
(21) Anmeldenummer: 14153001.4
(22) Anmeldetag: 29.01.2014
(51) Int. Cl.: B66B 15/04, F16H 55/38, F16H 55/50

(54) **Gummiprofil**
Rubber profile
Profilé en caoutchouc

(30) Priorität: 25.02.2013 DE 102013203047
(43) Veröffentlichungstag der Anmeldung: 27.08.2014
(73) Patentinhaber: Semperit AG Holding, 1031 Wien (AT)
(72) Erfinder: Füllenhals, Martin, 2700 Wiener Neustadt (AT); Caffin, Frederic, 69800 Saint Priest (FR)
(74) Vertreter: Müller Schupfner & Partner Patent- und Rechtsanwaltspartnerschaft mbB

(56) Entgegenhaltungen:
- DE-A1- 2 117 410
- DE-B- 1 042 307
- FR-A- 1 263 681
- FR-A1- 2 820 483
- US-A- 4 571 225

## Beschreibung

Die vorliegende Erfindung betrifft ein Gummiprofil für Laufrollen von Seilbahnen sowie eine Laufrolle für Seilbahnen.

Gummiprofile der genannten Art, auch Seilbahneinlageprofile oder Seilbahneinlageschnüre genannt, finden ihren Einsatz in Antriebs-, Umlenk-, Ablenk-, Führungsund Spannseilscheiben im Bereich der Seilbahntechnik. Weiter werden sie auch als Einlagen in Laufrollen eingesetzt, zum Beispiel in Schleppliften. Hierfür werden die Gummiprofile im Regelfall mit einem Hammer oder anderen Vorrichtungen in eine Ausnehmung der Laufrolle eingeschlagen. Das Gummiprofil ist dann mittels Hinterschneidungen und durch die Rückstellkräfte des Gummimaterials in der Laufrolle fixiert. Nachteilig dabei ist, dass der Einbau des Gummiprofils äußerst kraftaufwendig und zeitintensiv ist.

FR 2820483 A1, das die nächstliegenden Stand der Technik repräsentiert, offenbart eine Seilrolle mit einem Reibeinsatz, welcher in seinen Seitenflächen sich längs erstreckende Nuten aufweist.

DE 1042307 beschreibt eine Treibscheibe mit einer Ausfütterung, welche durch einen mit einem thermoplastischen Kunststoff ummantelten Kern gebildet ist. Die Ausfütterung ist mittels eines Bolzens von innen an der Treibscheibe befestigt. FR 1263681 beschreibt einen lamellenartigen Einsatz für eine Seilrolle mit gezackten Seitenflächen.

US 4571225 offenbart eine Seilrollenanordnung mit bogenförmigen Einsätzen, die mittels Schraubbolzen an der Seilrolle befestigt sind.

DE 2117410 beschreibt eine Treibscheibe für eine Fördermaschine, in deren Rille Reibblöcke eingesetzt sind, wobei die Rille unterschnitten ist und die Reibblöcke in die Unterschneidungen eingepasste Schultern aufweisen.

Es ist also Aufgabe der vorliegenden Erfindung, ein Gummiprofil für Laufrollen von Seilbahnen sowie eine Laufrolle für Seilbahnen bereitzustellen, die einen Einbau des Gummiprofils wesentlich leichter, schneller und effizienter ermöglichen.

Diese Aufgabe wird gelöst durch ein Gummiprofil für Laufrollen von Seilbahnen gemäß Anspruch 1 sowie eine Laufrolle für Seilbahnen gemäß Anspruch 10. Weitere Vorteile und Merkmale der Erfindung ergeben sich aus den Unteransprüchen sowie der Beschreibung mit den beigefügten Figuren.

Erfindungsgemäß weist ein Gummiprofil für Laufrollen für Seilbahnen eine Lauffläche und eine im Wesentlichen gegenüberliegende Anordnungsfläche auf, wobei sich das Gummiprofil entlang einer Profilrichtung erstreckt, wobei die Lauffläche und die Anordnungsfläche mit zwei Seitenflächen einen Querschnitt bilden, und wobei der Querschnitt mindestens zwei Rücksprünge aufweist. Bevorzugt findet das Gummiprofil Anwendung in Laufrollen für z. B. Schlepplifte sowie in Antriebs-, Umlenk-, Ablenk-, Führungs- und Spannseilscheiben etc.. Derartige Gummiprofile werden auch als Seilbahneinlageprofile oder Seilbahneinlageschnüre bezeichnet. Bevorzugt werden antistatische oder isolierende Gummimischungen zu deren Herstellung verwendet. Im unmontierten Zustand weist das Gummiprofil eine im Wesentlichen längliche Erstreckung entlang der Profilrichtung auf. Der Querschnitt steht im Wesentlichen senkrecht zur Profilrichtung und ist entlang derer im Wesentlichen konstant ausgebildet. Der Querschnitt kann als klein bezogen auf eine Länge des Gummiprofils entlang der Profilrichtung bezeichnet werden. Die Lauffläche dient beispielsweise der Führung eines Seils, insbesondere eines Stahlseils, und weist hierfür mit Vorteil eine Konturierung bzw. Vertiefungen auf, um das Stahlseil bestmöglich zu führen. Die der Lauffläche im Wesentlichen gegenüberliegende Anordnungsfläche steht bevorzugt in Kontakt mit der Laufrolle. Das Gummiprofil ist bevorzugt im Wesentlichen symmetrisch zur einer vertikal verlaufenden Mittelachse ausgebildet. Die Seitenflächen bzw. Teile der Seitenflächen können zumindest annähernd parallel zur Mittelachse verlaufen. Der in dem Querschnitt angeordnete Rücksprung kann als gezielte Schwächung des Querschnitts verstanden werden. Ziel ist es, durch den Rücksprung zumindest bereichsweise eine Verformbarkeit des Querschnitts quer zur Profilrichtung zu erhöhen. Mit anderen Worten kann sozusagen bereichsweise eine Nachgiebigkeit des Querschnitts quer zur Profilrichtung realisiert werden. Durch den Rücksprung bzw. durch die gezielte Materialwegnahme (in Form der Rücksprünge) kann der Querschnitt derart nachgeben, dass er mit deutlich geringerem Kraftaufwand in eine Kontur einer Laufrolle eingebracht werden kann. Über seinen Umfang bildet der Querschnitt eine Außenkontur aus. In zumindest einem Bereich oder Abschnitt der Außenkontur ist der Rücksprung ausgebildet. Der Rücksprung ist also ein spezieller "Teil" der Außenkontur. Beim Einbau wird neben dem Querschnitt also insbesondere der Bereich der Außenkontur verformt, in welchem der Rücksprung angeordnet ist.

Der Rücksprung nimmt dann, durch die Rückstellkräfte des Gummimaterials, im montierten Zustand bevorzugt wieder seine ursprüngliche Form an, abhängig natürlich von der Form der Laufrolle bzw. deren Hinterschneidungen etc.. Der Rücksprung kann als ein Bereich der Außenkontur bezeichnet werden, welcher sich mehr als die restlichen Bereiche der Außenkontur, in Richtung einer Mittellinie des Gummiprofils erstreckt. Dies schließt mit ein, dass z. B. die Seitenfläche, die die Anordnungsfläche und die Lauffläche miteinander verbindet, als ein großer Rücksprung ausgebildet sein kann. In diesem Fall würde die Seitenfläche eine zur Mittellinie des Gummiprofils hin gekrümmte oder konkave Form aufweisen. Eher bevorzugt sind allerdings Ausführungsformen, bei welchen der Rücksprung sich signifikant von den angrenzenden Bereichen der Außenkontur abhebt. Bevorzugt ist der Rücksprung im Wesentlichen rund bzw. mit Vorteil auch möglichst kreisrund geformt. Bevorzugt ist er auch halbkreisförmig oder viertelkreisförmig geformt. Mit Vorteil formt er ein Kreissegment. Sehr bevorzugt ist beispielsweise ein halbkreisförmiger Rücksprung dessen Mittelpunkt auf einer gedachten Linie der Außenkontur liegt, die sich ergeben würde, wenn der Rücksprung in diesem Bereich nicht vorhanden wäre. Ebenso bevorzugt kann der Rücksprung aus geraden Abschnitten gebildet sein, welche dann in einen runden oder sogar kreisrunden Abschnitt übergehen. Es versteht sich, dass der Rücksprung auch polygonal ausgeführt und somit Ecken aufweisen, und bevorzugt die Form einer Nut besitzen kann.

Mit Vorteil weist der Querschnitt zumindest eine Ausnehmung auf. Mit Vorteil ist die Ausnehmung eine Öffnung oder ein Loch innerhalb des Querschnitts. Anders als der Rücksprung weist also die Ausnehmung keinen Bezug zur Außenkontur auf bzw. ist mit dieser verbunden oder ist ein Teil von dieser. Für die Ausnehmung sind sämtliche Geometrien vorstellbar, welche im Rahmen der Herstellung des Gummiprofils möglich sind, beispielsweise runde, ovale oder eckige Querschnitte. Bevorzugt sind mehrere Rücksprünge und/oder auch Ausnehmungen parallel zur Mittelachse des Gummiprofils symmetrisch angeordnet. Abhängig von der Form der Laufrolle kann es auch vorteilhaft sein, auf eine symmetrische Anordnung zu verzichten. Hinsichtlich der Funktion des Ausnehmung gilt das zum Rücksprung Gesagte.

Zweckmäßigerweise erstrecken sich der zumindest eine Rücksprung und/oder die zumindest eine Ausnehmung zumindest teilweise entlang der Profilrichtung. Mit Vorteil sind der zumindest eine Rücksprung sowie die zumindest eine Ausnehmung über die ganze Länge des Gummiprofils ausgebildet.

Mit Vorteil weist zumindest eine der Seitenflächen zumindest einen Rücksprung auf. Vorteilhafterweise ist in jeder der Seitenflächen ein Rücksprung symmetrisch zur Mittelachse des Gummiprofils angeordnet. Mit Vorteil ist der Rücksprung in der Seitenfläche des Gummiprofils in dem Bereich angeordnet, welcher näher zur Lauffläche liegt. Mit Vorteil ist also der Rücksprung näher zur Lauffläche als zur Anordnungsfläche positioniert. Damit können insbesondere der obere seitliche Bereich des Querschnitts bzw. die oberen seitlichen Bereiche des Querschnitts flexibler gestaltet werden. Zweckmäßigerweise kann dadurch der Querschnitt in diesen Bereichen quer zur Profilrichtung leichter verformt werden. Mit Vorteil ist der Rücksprung zur Mittellinie des Gummiprofils hin sich verjüngend ausgebildet.

Bevorzugterweise ist zwischen der Lauffläche und dem zumindest einen Rücksprung der Seitenfläche ein Stützabschnitt ausgebildet. Mit Vorteil ist also das Gummiprofil derart ausgebildet, dass direkt unterhalb der Lauffläche keine Rücksprünge und/oder Ausnehmungen vorgesehen sind, um die radiale Seilkraft des Stahlseiles ungehindert übertragen zu können. Mit Vorteil ist dazu ein Teil des Rücksprungs bzw. ein oberer Abschnitt des Rücksprungs im Wesentlichen parallel zur Lauffläche ausgebildet.

Mit Vorteil bildet der zumindest eine Rücksprung der Seitenfläche einen Halteabschnitt aus, welcher für eine form- und/oder kraftschlüssige Anordnung mit bzw. an einer Laufrolle ausgelegt ist. Es ist also nicht ausgeschlossen, dass in dem Rücksprung bzw. an dem Halteabschnitt des Rücksprungs ein Eingriffsabschnitt der Laufrolle eingreift.

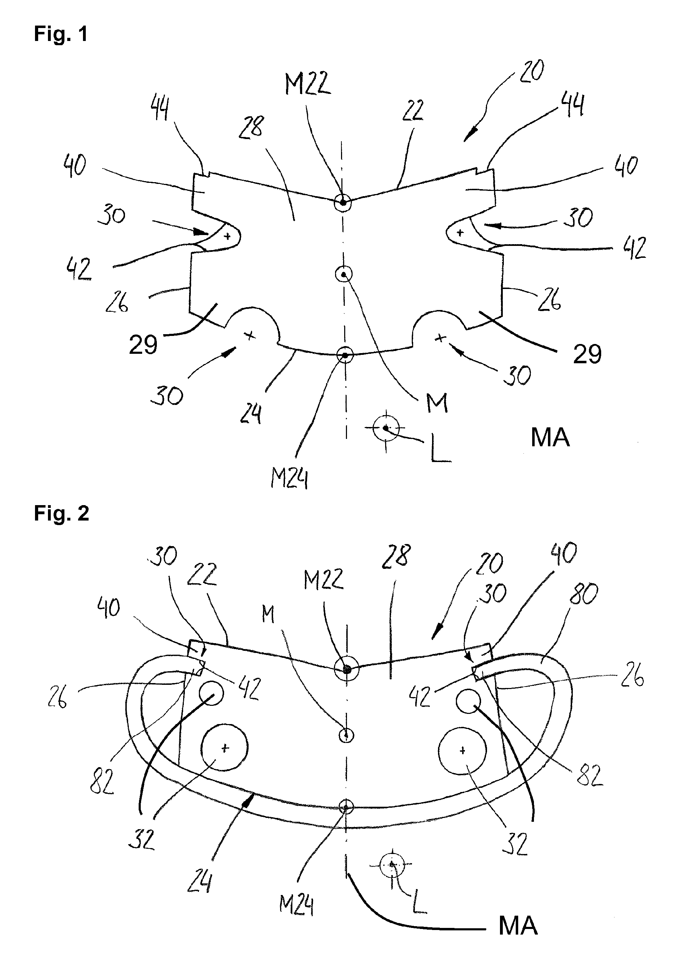

Zweckmäßigerweise weist die Lauffläche zumindest einen Rücksprung bzw. eine Vertiefung auf, welche im Bereich eines Übergangs der Lauffläche zu einer angrenzenden Seitenfläche ausgebildet ist. Zweckmäßigerweise erstreckt sich die zumindest eine Vertiefung entlang der Profilrichtung. Mit Vorteil ist symmetrisch zur Mittelachse des Gummiprofils auf beiden Seiten der Mittelachse je eine Vertiefung in der Lauffläche vorgesehen. Mit Vorteil ist die Vertiefung ähnlich einer Nut oder dergleichen ausgeführt. Mit Vorteil weist die Vertiefung ein - soweit es im Rahmen der Herstellung des Gummiprofils möglich ist - im Wesentlichen eckiges bzw. scharfkantiges Profil auf. Besonders bevorzugt ist die Vertiefung als sich in Richtung der Seitenfläche erstreckender Absatz oder Stufe ausgebildet. Mit Vorteil dient die Vertiefung dazu, eine form- und/oder kraftschlüssige Verbindung mit einem Eingriffsabschnitt einer Laufrolle bereitzustellen. Insbesondere kann über die Vertiefung bzw. über die Vertiefungen in der Lauffläche eine Zentrierfunktion bereitgestellt werden. Es wird also sichergestellt, dass das Gummiprofil mittels der Vertiefung(en) durch die Laufrolle (und dessen Eingriffsabschnitte) in der richtigen Position gehalten wird. Zweckmäßigerweise ist das Gummiprofil also mittels der Vertiefung(en) durch die Laufrolle zentrierbar. Selbstverständlich kann das Gummiprofil durch die Vertiefung(en) auch entlang der Mittelachse des Gummiprofils in der Laufrolle fixiert bzw. gehalten werden. Die Geometrie der Vertiefung in der Lauffläche bedingt, dass sich die Vertiefung auch in die jeweils angrenzende Seitenfläche hinein erstrecken kann bzw. deren Länge um eine Höhe der Vertiefung verkürzt. Hierzu sei insbesondere auf die Figur 1 des Figurenteils hingewiesen.

Mit Vorteil ist auch zumindest eine Seitenfläche mit zumindest einem Rücksprung bzw. einer Vertiefung versehen. Alternativ bevorzugt ist nur zumindest eine Seitenfläche mit zumindest einer Vertiefung versehen.

Zweckmäßigerweise ist die Lauffläche konkav ausgebildet oder weist vorzugsweise eine im Wesentlichen entlang der Profilrichtung verlaufende Mittellinie auf, welche zu einer Mittellinie des Gummiprofils hin verlagert ist. Bevorzugt liegt die Mittellinie der Lauffläche auf der Mittelachse des Gummiprofils. Die Teilflächen links und rechts der Lauffläche sind bevorzugt zu dieser symmetrisch ausgebildet. Die Mittellinie der Lauffläche kann aber auch zur Mittelachse des Gummiprofils versetzt angeordnet sein. Eine nicht symmetrische Lauffläche ist die Folge. Die Mittellinie der Lauffläche ist bevorzugt in Richtung der Mittellinie des Gummiprofils verlagert, d. h. die Mittellinie bzw. der Bereich der Lauffläche im Bereich der Mittellinie ist gegenüber den angrenzenden Bereichen der Lauffläche in Richtung der Mittellinie des Gummiprofils verlagert. Wie bereits eingangs erwähnt, soll damit eine Kontur bereitgestellt werden, in welcher das Stahlseil bestmöglich geführt wird. Zu beiden Seiten der Mittellinie der Lauffläche sind die Flächen der Lauffläche also bevorzugt in Richtung der Mittellinie der Lauffläche bzw. zur Mittellinie des Gummiprofils hin geneigt. Bevorzugt kann die Lauffläche auch konkav, also zur Mittellinie des Gummiprofils hin gewölbt ausgebildet sein. Es versteht sich, dass die Lauffläche auch beispielsweise Rillen aufweisen kann, um mehrere ggfs. auch mehrer Seile zu führen. Auch in diesem Fall kann dann die Mittellinie zur Lauffläche der Mittellinie des Gummiprofils hin verlagert sein.

Erfindungsgemäß weist die Anordnungsfläche zumindest einen Rücksprung auf. Es versteht sich, dass bevorzugt symmetrisch zur Mittelachse des Gummiprofils zu beiden Seiten je ein Rücksprung in der Anordnungsfläche vorgesehen ist. Bevorzugt ist der Rücksprung als runder, besonderes bevorzugt als im Wesentlichen kreisrunder, Halbkreis ausgebildet. Mit Vorteil ist der Rücksprung bzw. sind die Rücksprünge in der Anordnungsfläche in dem Abschnitt der Anordnungsfläche angeordnet, die näher an den Seitenflächen als an der Mittelachse liegen. Damit können insbesondere die unteren seitlichen Bereiche des Querschnitts leichter verformt werden, wodurch der Einbau in die Laufrolle erleichtert wird.

Bevorzugt bilden ein Rücksprung in der Seitenfläche und ein Rücksprung in der Anordnungsfläche einen beweglichen Eckbereich aus. Dieser erleichtert die Montage, da er quer zur Profilrichtung eine Beweglichkeit aufweist.

Mit Vorteil ist die Anordnungsfläche konvex ausgebildet oder weist vorzugsweise eine im Wesentlichen entlang der Profilrichtung verlaufende Mittellinie auf, welche von der Mittellinie des Querschnitts weg verlagert ist. Bevorzugt liegt die Mittellinie der Anordnungsfläche auf der Mittelachse des Gummiprofils. Die Teilflächen links und rechts der Anordnungsfläche sind bevorzugt zu dieser symmetrisch ausgebildet. Die Mittellinie der Anordnungsfläche kann vorteilhafterweise aber auch zur Mittelachse des Gummiprofils versetzt angeordnet sein. Besonders bevorzugt ist für die Lauffläche eine sich im Wesentlichen von der Mittellinie des Gummiprofils sich weg erstreckende Krümmung. Vorteilhafterweise kann auf der Anordnungsfläche ein Stahlcord oder dergleichen angeordnet sein.

Mit Vorteil umfasst der zumindest eine Rücksprung oder die zumindest eine Ausnehmung eine Fläche, die im Verhältnis zu einer Fläche des Querschnitts in einem Bereich von 0,02 bis 0,3 liegt. Je höher das Verhältnis, desto stärker ist sozusagen der Querschnitt "geschwächt", desto leichter ist er also deformierbar und montierbar. Mit Vorteil liegt ein Verhältnis einer Fläche des Rücksprungs in der Anordnungsfläche zur Fläche des Querschnitts in einem Bereich von 0,02 bis 0,05, besonders bevorzugt in einem Bereich von 0,25 bis 0,45, ganz besonders bevorzugt in einem Bereich von 0,03 bis 0,04. Mit Vorteil liegt ein Verhältnis einer Fläche des Rücksprungs der Seitenfläche zur Fläche des Querschnitts in einem Bereich von 0,04 bis 0,07, besonders bevorzugt in einem Bereich von 0,45 bis 0,65, ganz besonders bevorzugt in einem Bereich von 0,05 bis 0,06.

Erfindungsgemäß ist eine Laufrolle für Seilbahnen mit einem Gummiprofil vorgesehen, welches eine Lauffläche und eine im Wesentlichen gegenüberliegende Anordnungsfläche aufweist, wobei sich das Gummiprofil entlang einer Profilrichtung erstreckt, und wobei die Lauffläche und die Anordnungsfläche über zwei Seitenflächen einen Querschnitt bilden, wobei der Querschnitt mindestens zwei Rücksprünge aufweist.

Mit Vorteil weist die Laufrolle einen Eingriffsabschnitt auf, welcher form- und/oder kraftschlüssig in einen Halteabschnitt des Gummiprofils eingreift bzw. ausgelegt ist, form- und/oder kraftschlüssig in einen Halteabschnitt des Gummiprofils einzugreifen. Besonders bevorzugt greift der Eingriffsabschnitt in eine Vertiefung der Lauffläche des Gummiprofils ein. Mit Vorteil kann damit das Gummiprofil innerhalb der Laufrolle form- und/oder kraftschlüssig gehalten sowie zentriert werden. Es versteht sich, dass bevorzugt zwei Eingriffsabschnitte symmetrisch zu einer Mittelachse bzw. zu einer Mittellinie des Gummiprofils an der Laufrolle vorgesehen sind.

Die genannten Vorteile und Merkmale des Gummiprofils gelten in gleicher Weise für die Laufrolle.

Weitere Vorteile und Merkmale ergeben sich aus der nachfolgenden Beschreibung bevorzugter Ausführungsformen des erfindungsgemäßen Gummiprofils für Laufrollen von Seilbahnen sowie der erfindungsgemäßen Laufrolle für Seilbahnen mit Bezug auf die beigefügten Figuren. Einzelne Merkmale der einzelnen Ausführungsformen können dabei im Rahmen der Erfindung miteinander kombiniert werden.

Es zeigen:
- Figur 1:: eine bevorzugte Ausführungsform eines Gummiprofils in einer Schnittansicht quer zu einer Profilrichtung;
- Figur 2:: eine weitere bevorzugte Ausführungsform eines Gummiprofils angeordnet in einer Laufrolle.

Figur 1 zeigt eine bevorzugte Ausführungsform eines Gummiprofils 20 in einer Schnittdarstellung quer zu einer Profilrichtung L gesehen. Das Gummiprofil 20 weist einen Querschnitt 28 auf, welcher im Wesentlichen senkrecht zur Profilrichtung L bzw. einer Mittellinie M des Gummiprofils 20 orientiert ist. Parallel zur Mittellinie M des Gummiprofils 20 verlaufen eine Mittellinie M22 der Lauffläche sowie eine Mittellinie M24 der Anordnungsfläche. Innerhalb des Querschnitts 28 und senkrecht zur Profilrichtung L steht eine Mittelachse MA des Gummiprofils 20. Das Gummiprofil 20 weist eine Lauffläche 22 auf, deren Mittellinie M22 zur Mittellinie M des Gummiprofils 20 hin verlagert ist. Symmetrisch zur Mittelachse MA des Gummiprofils 20 weist die Lauffläche 22 je eine Vertiefung 44 auf, welche zum Eingriff einer Laufrolle 80 (nicht dargestellt) dient. Insbesondere kann das Gummiprofil 20 über die Vertiefungen 20 zentriert werden. Im Wesentlichen gegenüber der Lauffläche 22 liegt eine Anordnungsfläche 24, welche symmetrisch mit zwei Rücksprüngen 30 versehen ist. Die Rücksprünge 30 in der Anordnungsfläche 24 sind als im Wesentlichen kreisrunde Bögen ausgebildet. Die Lauffläche 22 und die Anordnungsfläche 24 sind zu beiden Seiten der Mittelachse MA mit Seitenflächen 26 verbunden, welche ebenfalls je einen Rücksprung 30 aufweisen. Die Rücksprünge 30 in den Seitenflächen 26 weisen gerade Bereiche auf, welche in der in Figur 1 dargestellten bevorzugten Ausführungsform die Funktion eines Halteabschnitts 42 bereitstellen. Die Halteabschnitte 42 dienen beispielsweise der Anordnung bzw. form- und/oder kraftschlüssigen Festlegung eines weiteren Elements, beispielsweise der Laufrolle 80. Die Rücksprünge 30 in den Seitenflächen 26 bzw. deren obere Abschnitte bilden zwischen der Lauffläche 22 je einen Stützabschnitt 42 aus. Deutlich zu erkennen sind die bevorzugt im Wesentlichen leicht beweglichen Eckbereiche 29, welche zu beiden Seiten der Mittelachse MA zwischen den Rücksprüngen 30 in den Seitenflächen 26 und der Anordnungsfläche 24 ausgebildet sind

Figur 2 zeigt eine weitere bevorzugte Ausführungsform eines Gummiprofils 20 angeordnet in einer Laufrolle 80. Das Gummiprofil 20 umfasst eine Lauffläche 22 und eine im Wesentlichen gegenüber angeordnete Anordnungsfläche 24. Die Anordnungsfläche 24 steht in Kontakt mit der Laufrolle 80. Die Anordnungsfläche 24 weist eine Mittellinie M24 auf, welche im Wesentlichen parallel zu einer Mittellinie M22 der Lauffläche 22 positioniert ist. Sowohl die Mittellinie M22 der Lauffläche 22 als auch die Mittellinie M24 der Anordnungsfläche 24 sind im Wesentlichen parallel zu einer Mittellinie M des Gummiprofils 20 orientiert. Im Wesentlichen senkrecht auf die eben genannten Mittellinien steht ein Querschnitt 28. Der Querschnitt 28 weist in der in Figur 2 dargestellten bevorzugten Ausführungsform des Gummiprofils 20 insgesamt vier Ausnehmungen 32 auf, welche im Wesentlichen einen runden Querschnitt aufweisen. Es versteht sich, dass diese ebenfalls im Wesentlichen senkrecht auf eine Profilrichtung L des Gummiprofils 20 stehen. Zu beiden Seiten einer Mittelachse MA des Gummiprofils 20 greift die Laufrolle 80 mit Eingriffsabschnitten 82 in Rücksprünge 30 der Seitenflächen 26 ein. Die Rücksprünge 30 sind dazu mit Halteabschnitten 42 versehen. Es ist leicht nachvollziehbar, dass die unterhalb der Eingriffsabschnitte 82 angeordneten Ausnehmungen 32 die Montage erleichtern, da der Querschnitt 28 in diesen Bereichen gezielt nachgeben kann. Dabei sei nochmals darauf hingewiesen, dass in alternativ bevorzugten Ausführungsformen die Laufrolle 80 bzw. deren Eingriffsabschnitte 82 nicht in den Rücksprüngen 30 angeordnet sind, sondern bevorzugt in bzw. an Vertiefungen 44 (hier nicht dargestellt, vgl. Figur 1).

### Bezugszeichenliste

- 20: Gummiprofil
- 22: Lauffläche
- 24: Anordnungsfläche
- 26: Seitenfläche
- 28: Querschnitt
- 29: Eckbereich
- 30: Rücksprung
- 32: Ausnehmung
- 40: Stützabschnitt
- 42: Halteabschnitt
- 44: Vertiefung
- 80: Laufrolle
- 82: Eingriffabschnitt
- M: Mittellinie (des Gummiprofils)
- MA: Mittelachse (des Gummiprofils)
- M22: Mittellinie der Lauffläche
- M24: Mittellinie der Anordnungsfläche
- L: Profilrichtung

## Patentansprüche

1. Gummiprofil (20) für Laufrollen von Seilbahnen,
mit einer Lauffläche (22) und einer gegenüberliegenden Anordnungsfläche (24),
wobei sich das Gummiprofil (20) entlang einer Profilrichtung (L) erstreckt, wobei die Lauffläche (22) und die Anordnungsfläche (24) mit zwei Seitenflächen (26) einen Querschnitt (28) bilden, und
wobei der Querschnitt (28) mindestens zwei Rücksprünge (30) aufweist, **dadurch gekennzeichnet,**
**dass** die Rücksprünge (30) in zumindest einer der Seitenflächen (26) und in der Anordnungsfläche (24) gebildet sind.

2. Gummiprofil (20) nach Anspruch 1,
wobei der Querschnitt (28) zumindest eine Ausnehmung (32) aufweist.

3. Gummiprofil (20) nach Anspruch 1 oder 2,
wobei sich der zumindest eine Rücksprung (30) und/oder die zumindest eine Ausnehmung (32) zumindest teilweise entlang der Profilrichtung (L) erstrecken.

4. Gummiprofil (20) nach einem der Ansprüche 1-3,
wobei zwischen der Lauffläche (22) und dem zumindest einen Rücksprung (30) der Seitenfläche (26) ein Stützabschnitt (40) ausgebildet ist.

5. Gummiprofil (20) nach einem der Ansprüche 1-4,
wobei der zumindest eine Rücksprung (30) der Seitenfläche (26) einen Halteabschnitt (42) ausbildet, welcher für eine form- und/oder kraftschlüssige Anordnung an einer Laufrolle (80) ausgelegt ist.

6. Gummiprofil (20) nach einer der vorhergehenden Ansprüche,
wobei die Lauffläche (22) zumindest einen Rücksprung bzw. eine Vertiefung (44) aufweist, welche(r) im Bereich eines Übergangs der Lauffläche (22) zu einer angrenzenden Seitenfläche (26) ausgebildet ist.

7. Gummiprofil (20) nach einem der vorhergehenden Ansprüche,
wobei die Lauffläche (22) konkav ausgebilde t ist und vorzugsweise eine entlang der Profilrichtung (L) verlaufenden Mittellinie (M22) aufweist, welche zu einer Mittellinie (M) des Gummiprofils (20) hin verlagert ist.

8. Gummiprofil (20) nach einem der vorhergehenden Ansprüche,
wobei die Anordnungsfläche (24) konvex ausgebildet ist und vorzugsweise eine entlang der Profilrichtung (L) verlaufende Mittellinie (M24) aufweist, welche von der Mittelinie (M) des Querschnitts (28) weg verlagert ist.

9. Gummiprofil (20) nach einem der vorhergehenden Ansprüche,
wobei der zumindest eine Rücksprung (30) oder die zumindest eine Ausnehmung (32) eine Fläche umfassen, die im Verhältnis zu einer Fläche des Querschnitts (28) in einem Bereich von 0,02-0,3 liegt.

10. Laufrolle (80) für Seilbahnen,
mit einem Gummiprofil (20), welches eine Lauffläche (22) und eine gegenüberliegende Anordnungsfläche (24) aufweist,
wobei sich das Gummiprofil (20) entlang einer Profilrichtung (L) erstreckt, wobei die Lauffläche (22) und die Anordnungsfläche (24) über zwei Seitenflächen (26) einen Querschnitt (28) bilden, und
wobei der Querschnitt (28) mindestens zwei Rücksprünge (30) aufweist, **dadurch gekennzeichnet,**
**dass** die Rücksprünge (30) in zumindest einer der Seitenflächen (26) und in der Anordnungsfläche (24) gebildet sind.

11. Laufrolle (80) nach Anspruch 10,
wobei die Laufrolle (80) einen Eingriffsabschnitt (82) aufweist, welcher ausgelegt ist, form- und/oder kraftschlüssig in einen Halteabschnitt (42) des Gummiprofils (20) einzugreifen.

## Claims

1. A rubber profile for casters of funiculars,
having a tread (22) and an opposite arrangement surface (24),
wherein the rubber profile (20) extends along a profile direction (L),
wherein the tread (22) and the arrangement surface (24) form a cross section (28) with two laterals surfaces (26), and
wherein the cross section (28) has at least two setbacks (30), **characterized in that**
the setbacks (30) are formed in at least one of the lateral surfaces (26) and in the arrangement surface (24).

2. The rubber profile (20) according to claim 1,
wherein the cross section (28) has at least one recess (32).

3. The rubber profile (20) according to claim 1 or 2,
wherein the at least one setback (30) and/or the at least one recess (32) extend at least partially along a profile direction (L).

4. The rubber profile (20) according to one of the claims 1-3,
wherein between the tread (22) and the at least one setback (30) of the lateral surface (26) a supporting portion (40) is formed.

5. The rubber profile (20) according to one of the claims 1-4,
wherein the at least one setback (30) of the lateral surface (26) forms a holding portion (42), which designed for form-fitting and/or force-fitting arrangement on a caster (80).

6. The rubber profile (20) according to one of the preceding claims,
wherein the tread (22) has at least one setback or recess (44), respectively, which is formed in the region of a transition of the tread (22) to an adjacent lateral surface (26).

7. The rubber profile (20) according to one of the preceding claims,
wherein the tread (22) is formed in a concave manner and preferably has a center line (M22) that extends along the profile direction (L) and is displaced toward a center line (M) of the rubber profile (20).

8. The rubber profile (20) according to one of the preceding claims,
wherein the arrangement surface (24) is convexly formed and preferably has a center line (M24) that extends along the profile direction (L) and is displaced away from the center line (M) of the cross section (28).

9. The rubber profile (20) according to one of the preceding claims,
wherein the at last one setback (30) or the at least one recess (32) comprises a surface that has a ratio in a range of 0.02□0.3 in relation to a surface of the cross section (28).

10. A caster (80) for funiculars,
having a rubber profile (20) comprising a tread (22) and an opposite arrangement surface (24),
wherein the rubber profile extends along a profile direction (L),
wherein the tread (22) and the arrangement surface (24) form a cross section (28) across two laterals surfaces (26), and
wherein the cross section (28) has at least two setbacks (30), **characterized in that**
the setbacks (30) are formed in at least one of the lateral surfaces (26) and in the arrangement surface (24).

11. The caster (80) according to claim 10,
wherein the caster (80) comprises an engagement portion (82) which is designed for form-fittingly and/or force-fittingly engaging into a holding portion (42) of the rubber profile (20).

## Revendications

1. Profilé en caoutchouc (20) pour des galets de roulement de téléphériques, co
mportant une surface de roulement (22) et une surface de montage (24) située à l'opposé,
ledit profilé en caoutchouc (20) s'étendant le long d'une direction de profilé (L),
dans lequel la surface de roulement (22) et la surface de montage (24) forment avec deux surfaces latérales (26) une section transversale (28), et
dans lequel la section transversale (28) comprend au moins deux ressauts (30),
**caractérisé en ce que**
les ressauts (30) sont formés dans l'une au moins des surfaces latérales (26) et dans la surface de montage (24).

2. Profilé en caoutchouc (20) selon la revendication 1,
dans lequel la section transversale (28) comprend au moins un évidement (32).

3. Profilé en caoutchouc (20) selon la revendication 1 ou 2,
dans lequel ledit au moins un ressaut (30) et/ou ledit au moins un évidement (32) s'étendent au moins partiellement le long de la direction de profilé (L).

4. Profilé en caoutchouc (20) selon l'une des revendications 1 à 3,
dans lequel un tronçon de soutien (40) est réalisé entre la surface de roulement (22) et ledit au moins un ressaut (30) de la surface latérale (26).

5. Profilé en caoutchouc (20) selon l'une des revendications 1 à 4,
dans lequel ledit au moins un ressaut (30) de la surface latérale (26) réalise une portion de maintien (42), qui est conçue pour être agencée en coopération de formes et/ou en coopération de forces sur un galet de roulement (80).

6. Profilé en caoutchouc (20) selon l'une des revendications précédentes,
dans lequel la surface de roulement (22) comprend au moins un ressaut ou un renfoncement (44) qui est réalisé dans la région d'une transition de la surface de roulement (22) vers une surface latérale adjacente (26).

7. Profilé en caoutchouc (20) selon l'une des revendications précédentes,
dans lequel la surface de roulement (22) est réalisée concave et présente de préférence une ligne médiane (M22) s'étendant le long de la direction de profilé (L), laquelle est décalée en direction d'une ligne médiane (M) du profilé en caoutchouc (20).

8. Profilé en caoutchouc (20) selon l'une des revendications précédentes,
dans lequel la surface de montage (24) est réalisée convexe et présente de préférence une ligne médiane (M24) s'étendant le long de la direction de profilé (L), laquelle est décalée en éloignement de la ligne médiane (M) de la section transversale (28).

9. Profilé en caoutchouc (20) selon l'une des revendications précédentes,
dans lequel ledit au moins un ressaut (30) ou ledit au moins un évidement (32) enferme une surface qui présente un rapport sur une surface de la section transversale (28) dans une plage de 0,02 à 0,3.

10. Galet de roulement (80) pour téléphériques,
comprenant un profilé en caoutchouc (20) qui comporte une surface de roulement (22) et une surface de montage (24) située à l'opposé,
dans lequel le profilé en caoutchouc (20) s'étend le long d'une direction de profilé (L),
dans lequel la surface de roulement (22) et la surface de montage (24) forment, via deux surfaces latérales (26), une section transversale (28), et
dans lequel la section transversale (28) comporte au moins deux ressauts (30),
**caractérisé en ce que**
les ressauts (30) sont formés dans l'une au moins des surfaces latérales (26) et dans la surface de montage (24).

11. Galet de roulement (80) selon la revendication 10,
dans lequel le galet de roulement (80) comporte une portion d'engagement (82) qui est conçue pour s'engager en coopération de formes et/ou en coopération de forces dans une portion de maintien (42) du profilé en caoutchouc (20).
